# EUROPEAN PATENT APPLICATION

(11) **EP 4 535 866 A1**
(43) Date of publication of application: **09.04.2025**
(21) Application number: 23841916.2
(22) Date of filing: 30.05.2023
(51) Int. Cl.: H04W 36/00

(54) **SESSION ESTABLISHMENT METHOD, AND TERMINAL DEVICE, NETWORK-SIDE DEVICE AND STORAGE MEDIUM**

(30) Priority: 19.07.2022 CN 202210872005
(71) Applicant: ZTE Corporation, Shenzhen, Guangdong 518057 (CN)
(72) Inventor: LIU, Yikang, Shenzhen, Guangdong 518057 (CN)
(74) Representative: Savi, Massimiliano
(86) International application number: PCT/CN2023/097191
(87) International publication number: WO 2024/016848

(57) **Abstract**

Disclosed in the present application are a session establishment method, and a terminal device, a network-side device and a storage medium. The session establishment method is applied to a terminal device, and comprises: determining first QoS parameter information according to a service requirement (S210); sending, to a network-side device, a PDU session establishment request, which carries the first QoS parameter information, such that the network-side device determines second QoS parameter information according to the first QoS parameter information, and then generates a PDU session establishment response according to the second QoS parameter information (S220); and receiving the PDU session establishment response, which is returned by the network-side device, so as to establish a PDU session (S230).

## Description

### CROSS-REFERENCE TO RELATED APPLICATION

This application is filed on the basis of Chinese patent application No. 202210872005.8 filed July 19, 2022, and claims priority to the Chinese patent application, the entire contents of which are incorporated herein by reference.

### TECHNICAL FIELD

The present disclosure relates to the field of communication technologies, and more particularly, to a session establishment method, a terminal device, a network-side device, and a storage medium.

### BACKGROUND

With the advancement of 5th-Generation (5G) communication technologies, demand for high-bandwidth, low-latency services is increasing. In the related art, it is introduced in 3rd Generation Partnership Project (3GPP) protocol standards that in the process of establishing a 5G Protocol Data Unit (PDU) session, a terminal device sends a Data Network Name (DNN) identifying a slice to a network, and the network accepts the PDU session establishment after authenticating the terminal device, and at the same time specifies a Quality of Service (QoS) parameter indicator corresponding to the PDU session. The QoS parameter is determined by the network. However, because users' service requirements on the terminal device side are variable and complex, the assigned QoS parameter may not meet the actual service requirements of the terminal device, leading to a less satisfactory user experience.

### SUMMARY

Embodiments of the present disclosure provide a session establishment method, a terminal device, a network-side device, and a storage medium.

In accordance with a first aspect of the present disclosure, an embodiment provides a session establishment method, applied to a terminal device, the method including: determining first QoS parameter information according to a service requirement; sending, to a network-side device, a PDU session establishment request carrying the first QoS parameter information, such that the network-side device determines second QoS parameter information according to the first QoS parameter information, and generates a PDU session establishment response according to the second QoS parameter information; and receiving the PDU session establishment response returned by the network-side device, and establishing a PDU session.

In accordance with a second aspect of the present disclosure, an embodiment provides a session establishment method, applied to a terminal device, the method including: acquiring a service requirement; acquiring a DNN parameter of a service according to the service requirement; in response to detecting existence of a PDU session established based on the DNN parameter, determining third QoS parameter information according to the established PDU session and the service requirement; sending a PDU session modification request carrying the third QoS parameter information to a network-side device, such that the network-side device determines fourth QoS parameter information according to the third QoS parameter information, and generates a PDU session modification response according to the fourth QoS parameter information; and receiving the PDU session modification response returned by the network-side device, and modifying the PDU session.

In accordance with a third aspect of the present disclosure, an embodiment provides a session establishment method, applied to a network-side device, the method including: receiving, from a terminal device, a PDU session establishment request carrying first QoS parameter information, where the first QoS parameter information is determined by the terminal device according to a service requirement; determining second QoS parameter information according to the first QoS parameter information; generating a PDU session establishment response according to the second QoS parameter information; and sending the PDU session establishment response to the terminal device to establish a PDU session.

In accordance with a fourth aspect of the present disclosure, an embodiment provides a session establishment method, applied to a network-side device, the method including: receiving, from a terminal device, a PDU session modification request carrying third QoS parameter information, where the third QoS parameter information is determined by the terminal device according to a PDU session which has been established and a service requirement; performing, according to the third QoS parameter information, comparison and adjustment processing on a QoS parameter which is delivered in advance to determine fourth QoS parameter information; generating a PDU session modification response according to the fourth QoS parameter information; and sending the PDU session modification response to the terminal device to modify the PDU session.

In accordance with a fifth aspect of the present disclosure, an embodiment provides a terminal device, including: a memory, a processor, and a computer program stored in the memory and executable by the processor, where the computer program, when executed by the processor, causes the processor to implement the session establishment method in accordance with the first aspect or the second aspect.

In accordance with a sixth aspect of the present disclosure, an embodiment provides a network-side device, including: a memory, a processor, and a computer program stored in the memory and executable by the processor, where the computer program, when executed by the processor, causes the processor to implement the session establishment method in accordance with the third aspect or the fourth aspect.

In accordance with a seventh aspect of the present disclosure, an embodiment provides a computer-readable storage medium, storing computer-executable instructions which, when executed by a computer, cause the computer to implement the session establishment method in accordance with any one of the first aspect, the second aspect, the third aspect, and the fourth aspect.

### BRIEF DESCRIPTION OF DRAWINGS

FIG. 1 is a schematic diagram of a network architecture for implementing a session establishment method according to an embodiment of the present disclosure;
FIG. 2 is a schematic flowchart of a session establishment method applied to a terminal device according to an embodiment of the present disclosure;
FIG. 3 is a schematic flowchart of S210 in FIG. 2;
FIG. 4 is a schematic flowchart of a session establishment method applied to a terminal device according to another embodiment of the present disclosure;
FIG. 5 is a schematic flowchart of a session establishment method applied to a network-side device according to an embodiment of the present disclosure;
FIG. 6 is a schematic diagram of an application scenario of a session establishment method according to an embodiment of the present disclosure;
FIG. 7 is a schematic flowchart of PDU session establishment according to an embodiment of the present disclosure;
FIG. 8 is a schematic flowchart of PDU session modification according to an embodiment of the present disclosure;
FIG. 9 is a schematic structural diagram of a terminal device according to an embodiment of the present disclosure; and
FIG. 10 is a schematic structural diagram of a network-side device according to an embodiment of the present disclosure.

### DETAILED DESCRIPTION

To make the objects, technical schemes, and advantages of the present disclosure clear, the present disclosure is described in further detail in conjunction with accompanying drawings and embodiments. It should be understood that the specific embodiments described herein are merely used for illustrating the present disclosure, and are not intended to limit the present disclosure.

In the description of the present disclosure, the term "at least one" means one or more, the term "plurality of" (or multiple) means at least two, the term such as "greater than", "less than", "exceed" or variants thereof prior to a number or series of numbers is understood to not include the number adjacent to the term. In addition, although a logical order is shown in the flowcharts, in some cases, the steps shown or described may be performed in an order different from that in the flowcharts. In the specification, claims, or accompanying drawings, the terms "first", "second", or the like are intended to distinguish between similar objects but do not indicate a particular order or sequence.

The present disclosure provides a session establishment method, a terminal device, a network-side device, and a computer-readable storage medium. According to the scheme of the embodiments of the present disclosure, a terminal device determines first QoS parameter information according to a service requirement; then sends, to a network-side device, a PDU session establishment request carrying the first QoS parameter information, such that the network-side device determines second QoS parameter information according to the first QoS parameter information, and generates a PDU session establishment response according to the second QoS parameter information; and then receives the PDU session establishment response returned by the network-side device, and establishes a PDU session. In other words, by the scheme according to the embodiment of the present disclosure, the terminal device reports a QoS parameter reflecting an actual service requirement to the network-side device, such that the network-side device delivers a QoS parameter meeting the actual service requirement of the terminal device side, thereby ensuring the QoS of the actual service and improving user experience.

The embodiments of the present disclosure will be further described in detail below in conjunction with the accompanying drawings.

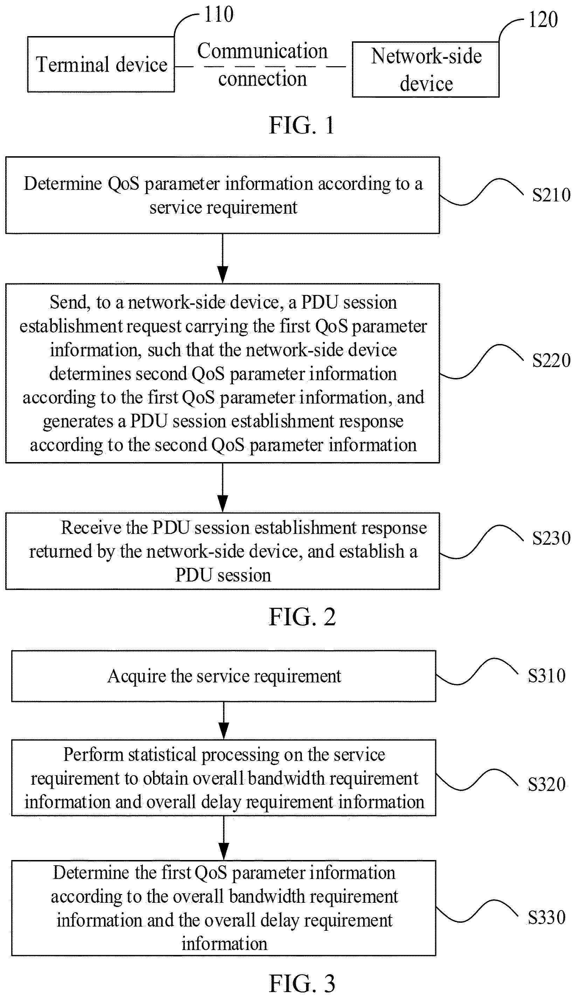

FIG. 1 is a schematic diagram of a network architecture for implementing a session establishment method according to an embodiment of the present disclosure. The network architecture includes a terminal device 110 and a network-side device 120, and the terminal device 110 is in communication connection with the network-side device 120.

The terminal device 110 determines first QoS parameter information according to a service requirement, and then sends, to the network-side device 120, a PDU session establishment request carrying the first QoS parameter information, such that the network-side device 120 determines second QoS parameter information according to the first QoS parameter information, and generates a PDU session establishment response according to the second QoS parameter information. Then, the terminal device 110 receives the PDU session establishment response returned by the network-side device 120, and establishes a PDU session. In this way, the terminal device 110 can cause the network-side device 120 to deliver a QoS parameter meeting the actual service requirement of the terminal device side, thereby ensuring the QoS of the actual service and improving user experience. The terminal device 110 can also receive a service requirement reported by a User Equipment (UE), then acquire a DNN parameter of a service according to the service requirement, and when existence of a PDU session established based on the DNN parameter is detected, determine third QoS parameter information according to the established PDU session and the service requirement. Then, the terminal device 110 sends a PDU session modification request carrying the third QoS parameter information to the network-side device 120, such that the network-side device 120 determines fourth QoS parameter information according to the third QoS parameter information, and generates a PDU session modification response according to the fourth QoS parameter information. Finally, the terminal device 110 receives the PDU session modification response returned by the network-side device 120, and modifies the PDU session. When the service requirement of the UE is updated, the terminal device 110 can cause the network-side device 120 to deliver a QoS parameter meeting the actual service requirement of the terminal device side, thereby ensuring the QoS of the actual service and improving user experience.

The network-side device 120 can receive, from the terminal device 110, a PDU session establishment request carrying first QoS parameter information, where the first QoS parameter information is determined by the terminal device 110 according to a service requirement; then determines second QoS parameter information according to the first QoS parameter information, and finally generates a PDU session establishment response according to the second QoS parameter information, and sends the PDU session establishment response to the terminal device 110 to establish a PDU session. The network-side device 120 can deliver a QoS parameter meeting the actual service requirement of the terminal device side, thereby ensuring the QoS of the actual service and improving user experience. The network-side device 120 can also receive, from the terminal device 110, a PDU session modification request carrying third QoS parameter information, where the third QoS parameter information is determined by the terminal device 110 according to a PDU session which has been established and a service requirement; then performs, according to the third QoS parameter information, comparison and adjustment processing on a QoS parameter which is delivered in advance to determine fourth QoS parameter information; and finally generates a PDU session modification response according to the fourth QoS parameter information, and sends the PDU session modification response to the terminal device 110 to modify the PDU session. When the service requirement of the UE is updated, the network-side device 120 can deliver a QoS parameter meeting the actual service requirement of the terminal device side, thereby ensuring the QoS of the actual service and improving user experience.

The terminal device 110 in the network architecture shown in FIG. 1 may be a wireless terminal device such as a Customer Premise Equipment (CPE) device or a USIM-Fi (UFi) device, or may be a mobile phone product. The type of the terminal device 110 is not particularly limited in the present disclosure. When the terminal device 110 is a wireless access terminal device capable of providing a network access service for other UEs, such as a CPE or a UFi device, the terminal device 110 can access a wireless communication network through a 5G communication technology, i.e., after the terminal device 110 is turned on, the terminal device 110 automatically searches for an available wireless communication network and connects to the network-side device 120 to complete registration. In addition, the terminal device 110 provides a network access service to one or more other UEs (such as a computer, a mobile phone, a tablet computer, etc.) through Wireless Fidelity (Wi-Fi), a network cable, a Universal Serial Bus (USB) cable, or other connection methods. The terminal device 110 can receive a service requirement reported by another UE connected to the terminal device 110, and determine first QoS parameter information according to the service requirement. When the terminal device 110 is a mobile phone product, the mobile phone product does not provide an access function for other terminal devices, but one or more application programs may be run on the terminal device 110 at the same time. In this case, the mobile phone product can also obtain a service requirement according to an application program being run, and determine first QoS parameter information according to the service requirement.

Regarding the UE in the network architecture shown in FIG. 1, it can be understood that when the terminal device 110 can provide a network access service, there may be one or more UEs connected to the terminal device 110, and the number of UEs connected to the terminal device 110 is not particularly limited in the present disclosure. Further, the UE may be a terminal device such as a computer, a mobile phone, or a tablet computer, and the type of the UE connected to the terminal device 110 is not particularly limited in the present disclosure.

Although the specific configuration of the network side is not shown in FIG. 1, it can be understood that the network side of a 5G operator network includes, but not limited to, a (Radio) access Network ((R)AN), a user-plane function network element, an access and mobility management function network element, a session management function network element, a policy control function network element, a network slice-specific authentication and authorization function network element, an authentication server function network element, a unified data management function network element, a network slice-specific authentication and authorization functional network element, etc. The function network elements of the network side work collaboratively to cooperate with the terminal device 110 to complete session establishment. The function network elements of the network side and their specific functions will not be described in detail in the present disclosure. The network architecture is applicable to 3GPP access technology protocols.

It can be understood that the network architecture and application scenarios described in the embodiments of the present disclosure are for the purpose of illustrating the technical schemes of the embodiments of the present disclosure more clearly, and do not constitute a limitation on the technical schemes provided in the embodiments of the present disclosure. It can be understood by those having ordinary skills in the art that with the evolution of network architectures and the emergence of new application scenarios, the technical schemes provided in the embodiments of the present disclosure are also applicable to similar technical problems.

Embodiments of the session establishment method of the present disclosure are proposed below based on the above network architecture.

FIG. 2 is a schematic flowchart of a session establishment method applied to a terminal device according to an embodiment of the present disclosure. The session establishment method may be applied to the terminal device in the network architecture shown in FIG. 1. The session establishment method includes, but not limited to, the following steps S210, S220, and S230.

At S210, first QoS parameter information is determined according to a service requirement.

At S220, a PDU session establishment request carrying the first QoS parameter information is sent to a network-side device, such that the network-side device determines second QoS parameter information according to the first QoS parameter information, and generates a PDU session establishment response according to the second QoS parameter information.

At S230, the PDU session establishment response returned by the network-side device is received, and a PDU session is established.

In an embodiment of the present disclosure, by the session establishment method including the above steps S210 to S230, the terminal device can determine first QoS parameter information according to a service requirement, and then send, to the network-side device, a PDU session establishment request carrying the first QoS parameter information, such that the network-side device determines second QoS parameter information according to the first QoS parameter information, and generates a PDU session establishment response according to the second QoS parameter information. Then, the terminal device can receive the PDU session establishment response returned by the network-side device, and establishes a PDU session. In this way, the terminal device can cause the network-side device to deliver a QoS parameter meeting the actual service requirement of the terminal device side, thereby ensuring the QoS of the actual service and improving user experience.

FIG. 3 is a schematic flowchart of S210 in FIG. 2. S210 of determining first QoS parameter information according to a service requirement includes, but not limited to, the following steps S310, S320, and S330.

At S310, a service requirement is acquired.

In this step, the terminal device acquires a service requirement. In an embodiment, when the terminal device is a wireless terminal device capable of providing a network access service for other UEs, such as a CPE or a UFi device, the terminal device connects to the network-side device, and provides a network access service for one or more other UEs (such as a computer, a mobile phone, a tablet computer, etc.), where one or more application programs are run on each of the one or more other UEs. In this case, the terminal device acquires a service requirement reported by a UE connected to the terminal device. In addition, when the terminal device is a device (such as a mobile phone product, etc.) that cannot provide a network access service for other user terminal devices, the mobile phone product does not provide a network access service for other UEs, but one or more application programs may be run on the mobile phone product, i.e., there may be a service requirement. In this case, the mobile phone product acquires its own service requirement. Therefore, the manner of acquiring the service requirement is not particularly limited in the present disclosure.

At S320, statistical processing is performed on the service requirement to obtain overall bandwidth requirement information and overall delay requirement information.

In this step, the terminal device performs statistical processing on the service requirement to obtain overall bandwidth requirement information and overall delay requirement information.

In an embodiment of the present disclosure, when the terminal device sends the PDU session establishment request to the network-side device, the PDU session establishment request not only carries the first QoS parameter information, but also carries a DNN parameter for identifying a service type of the service, and other information.

It can be understood that the service requirement acquired by the terminal device includes, but not limited to, the DNN parameter for identifying the service type of the service, a number of services belonging to the same service type, a bandwidth requirement of a single service, a delay requirement of a single service, etc. It can be understood that the terminal device may obtain corresponding information from the acquired service requirement according to actual requirements, and may also obtain a plurality of DNN parameters identifying different service types. The information included in the service requirement will not be described in detail in the present disclosure.

At S330, the first QoS parameter information is determined according to the overall bandwidth requirement information and the overall delay requirement information.

In this step, the terminal device determines the first QoS parameter information according to the overall bandwidth requirement information and the overall delay requirement information, i.e., the first QoS parameter information includes the overall bandwidth requirement information and the overall delay requirement information of the actual service requirement. This allows for the network-side device to deliver the second QoS parameter information meeting the actual service requirement with reference to the first QoS parameter information, thereby ensuring the QoS of the service on the terminal device side.

When the terminal device is a wireless terminal device capable of providing a network access service for other UEs, such as a CPE or a UFi device, the terminal device needs to support a large number of types of user data services, and a large number of network connections exist at the same moment. A PDU session established for transmitting user data of a specific service type may be simultaneously used by a plurality of application programs or a plurality of network connections. When the terminal device is a mobile phone product that cannot provide a network access service, a plurality of application programs or even application programs of the same service type may be simultaneously run on the terminal device, and therefore, a PDU session established for transmitting user data of a specific type may be simultaneously used by a plurality of application programs or a plurality of network connections. In this case, in the process of establishing a PDU session of a network slice in a 5G network, if the network-side device delivers a QoS parameter specified only according to the DNN parameter identifying the service type, the actual requirement of the terminal device side may not be met. Therefore, the terminal device needs to perform statistical processing on the actual service requirement to obtain the first QoS parameter information that can reflect the actual service requirement of the terminal device side, such that the network side delivers the second QoS parameter information meeting the actual service requirement of the terminal device side after adjusting the preset QoS parameter to-be-delivered according to the first QoS parameter information, to ensure the QoS of the service on the terminal device side and improve user experience.

In an embodiment of the present disclosure, performing statistical processing on the service requirement to obtain overall bandwidth requirement information and overall delay requirement information includes: acquiring a quantity of services and bandwidth information and delay information of each of the services according to the service requirement; and obtaining the overall bandwidth requirement information and the overall delay requirement information according to the quantity of services and the bandwidth information and the delay information of each of the services. In an embodiment, when the DNN parameter indicates a plurality of services and the services are running at the same time, the number of services is multiplied by the bandwidth information of a single service to obtain the overall bandwidth requirement information, and delay information of the service with a highest delay requirement among all the running services is determined as the overall delay requirement information. In addition, statistics on the overall bandwidth requirement information and the overall delay requirement information may be collected according to an actual service requirement, and the manner of collecting statistics on the overall bandwidth requirement information and the overall delay requirement information is not particularly limited in the present disclosure.

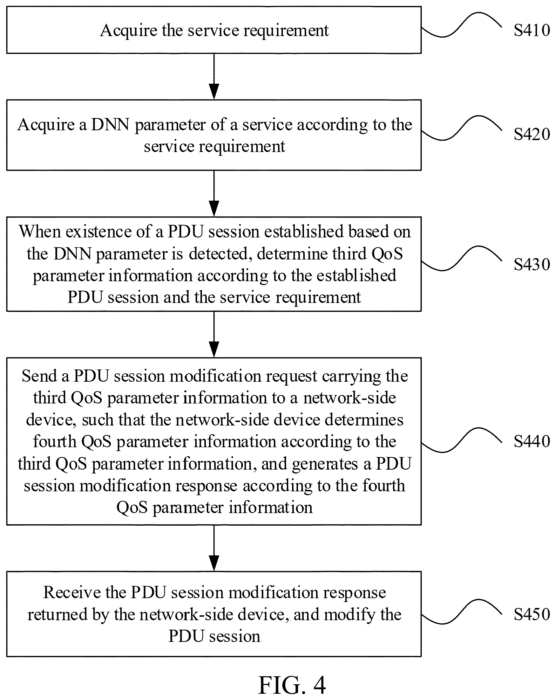

FIG. 4 is a schematic flowchart of a session establishment method applied to a terminal device according to another embodiment of the present disclosure. The session establishment method includes, but not limited to, the following steps S410, S420, S430, S440, and S450.

At S410, a service requirement is acquired.

In this step, the terminal device acquires a service requirement. It can be understood that when the service requirement changes during use, the terminal device acquires a service requirement reported by a UE or acquires a service requirement from itself.

At S420, a DNN parameter of a service is acquired according to the service requirement.

In this step, the terminal device acquires a DNN parameter of a service according to the service requirement. It can be understood that information such as service type, number of services, bandwidth requirement of a single service, or requirement of a single service is information related to the service requirement, and when one or more of such information changes, the service requirement will change, and the QoS parameter information delivered by the network side no longer meets the changed service requirement. The terminal device first needs to acquire the DNN parameter of the service according to the service requirement, and then acquire the number of services identified by the DNN parameter and other information.

At S430, when existence of a PDU session established based on the DNN parameter is detected, third QoS parameter information is determined according to the established PDU session and the service requirement.

In this step, when existence of a PDU session established based on the DNN parameter id detected, the terminal device determines third QoS parameter information according to the established PDU session and the service requirement. It can be understood that different DNN parameters are used for identifying different service types, and different PDU sessions are used to transmit user data of different service types. Therefore, it is necessary to detect whether a PDU session established based on the DNN parameter exists, i.e., to determine whether there is a PDU session corresponding to the service type, and perform corresponding processing according to the detection result. When existence of a PDU session established based on the DNN parameter is detected, third QoS parameter information is determined according to the established PDU session and the service requirement.

When existence of a PDU session established based on the DNN parameter is not detected, a new PDU session needs to be established according to the DNN parameter. A method of establishing a new PDU session is the same as the method flow of the steps S210 to S230.

In an embodiment of the present disclosure, determining third QoS parameter information according to the established PDU session and the service requirement includes: obtaining sixth QoS parameter information according to the established PDU session; performing statistical processing according to the sixth QoS parameter information and the service requirement to obtain overall bandwidth requirement update information and overall delay requirement update information; and determining the third QoS parameter information according to the overall bandwidth requirement update information and the overall delay requirement update information. It can be understood that the sixth QoS parameter information of the established PDU session includes a bandwidth requirement and a delay requirement of the current PDU session.

At S440, a PDU session modification request carrying the third QoS parameter information is sent to a network-side device, such that the network-side device determines fourth QoS parameter information according to the third QoS parameter information, and generates a PDU session modification response according to the fourth QoS parameter information.

At S450, the PDU session modification response returned by the network-side device is received, and the PDU session is modified.

In the embodiments of the present disclosure, by performing the steps S440 and S450, the terminal device sends a PDU session modification request carrying the third QoS parameter information to a network-side device, such that the network-side device determines fourth QoS parameter information according to the third QoS parameter information, and generates a PDU session modification response according to the fourth QoS parameter information; and then receives the PDU session modification response returned by the network-side device, and modifies the PDU session. The fourth QoS parameter information delivered by the network-side device meets the changed service requirement, and the modified PDU session can ensure the QoS of the service and improve user experience.

In an embodiment of the present disclosure, after the PDU session is established, the terminal device, when detecting that a network resource actually allocated by the network-side device cannot reach a level indicated in previously configured QoS parameter information, can also initiate a PDU session modification process to the network-side device, such that the network-side device reconfigures the QoS parameter of the PDU session.

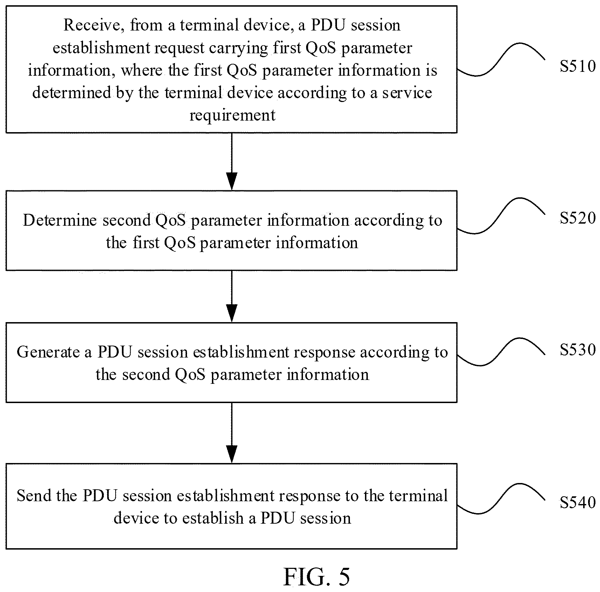

FIG. 5 is a schematic flowchart of a session establishment method applied to a network-side device according to an embodiment of the present disclosure. The session establishment method may be applied to the network-side device in the network architecture shown in FIG. 1. The session establishment method includes, but not limited to, the following steps S510, S520, S530, and S540.

At S510, a PDU session establishment request carrying first QoS parameter information is received from a terminal device, where the first QoS parameter information is determined by the terminal device according to a service requirement.

In this step, the network-side device receives, from a terminal device, a PDU session establishment request carrying first QoS parameter information, where the first QoS parameter information is determined by the terminal device according to a service requirement.

At S520, second QoS parameter information is determined according to the first QoS parameter information.

In this step, the network-side device determines second QoS parameter information according to the first QoS parameter information.

In an embodiment of the present disclosure, fifth QoS parameter information which is delivered in advance and bandwidth threshold information and time delay threshold information specified by an operator are acquired, and comparison and adjustment processing is performed on the fifth QoS parameter information according to the first QoS parameter information, the bandwidth threshold information, and the delay threshold information to determine the second QoS parameter information.

In an embodiment, the PDU session establishment request further includes a DNN parameter, and the network-side device acquires the fifth QoS parameter information which is delivered in advance according to the DNN parameter, and then authenticates a terminal product to acquire subscribed package information of a user of the terminal product, to determine network resource permission granted to the user, including bandwidth threshold information that the user is allowed to use, delay threshold information that the user can require, and other information.

In an embodiment of the present disclosure, performing comparison and adjustment processing on the fifth QoS parameter information according to the first QoS parameter information, the bandwidth threshold information, and the delay threshold information to determine the second QoS parameter information includes: determining the fifth QoS parameter information as the second QoS parameter information when the fifth QoS parameter information satisfies the first QoS parameter information, the bandwidth threshold information, and the delay threshold information; or adjusting the fifth QoS parameter information according to the first QoS parameter information, the bandwidth threshold information, and the delay threshold information to obtain the second QoS parameter information when the fifth QoS parameter information does not satisfy the first QoS parameter information.

In an embodiment, the fifth QoS parameter information is set by the network-side device, and includes preset bandwidth information and preset delay information. The network-side device acquires the overall bandwidth requirement information and the overall delay requirement information from the first QoS parameter information,
compares the fifth QoS parameter information with the first QoS parameter information, and when the preset bandwidth information is larger than the overall bandwidth requirement information and less than the bandwidth threshold information and the preset delay information is less than the overall delay requirement information and greater than the delay threshold information, determines the fifth QoS parameter information as the second QoS parameter information.

In a case where the fifth QoS parameter information does not meet the first QoS parameter information, in terms of bandwidth, when the overall bandwidth requirement information is greater than the bandwidth threshold information, the network-side device adjusts the preset bandwidth information to the bandwidth threshold information; when the overall bandwidth requirement information is less than the bandwidth threshold information, the network-side device adjusts the preset bandwidth information to the overall bandwidth requirement information; in terms of delay, when the overall delay requirement information is less than the delay threshold information, the network-side device adjusts the preset delay information to the delay threshold information; when the overall delay requirement information is greater than the delay threshold information, the network-side device adjusts the preset delay information to the overall delay requirement information. The network-side device determines, according to an actual result of the adjustment, bandwidth information and delay information that are to be actually delivered, and further determines second QoS parameter information to be actually delivered. When the actual service requirement exceeds the bandwidth threshold information and the delay threshold information specified by the operator, the network-side device delivers the second QoS parameter information including the bandwidth threshold information and the delay threshold information. It can be understood that the principle of adjusting the fifth QoS parameter which is delivered in advance by the network-side device is to meet the actual service requirement on the premise that the bandwidth threshold information and the delay threshold information specified by the operator are not exceeded.

At S530, a PDU session establishment response is generated according to the second QoS parameter information.

At S540, the PDU session establishment response is sent to the terminal device to establish a PDU session.

In an embodiment of the present disclosure, by the session establishment method including the above steps S530 to S540, the network-side device can generate a PDU session establishment response according to the second QoS parameter information, and then send the PDU session establishment response to the terminal device to establish a PDU session.

In an embodiment of the present disclosure, the session establishment method applied to a network-side device further includes: receiving, from a terminal device, by the network-side device, a PDU session modification request carrying third QoS parameter information, where the third QoS parameter information is determined by the terminal device according to a PDU session which has been established and a service requirement; performing, according to the third QoS parameter information, comparison and adjustment processing on a QoS parameter which is delivered in advance to determine fourth QoS parameter information; generating a PDU session modification response according to the fourth QoS parameter information; and sending the PDU session modification response to the terminal device to modify the PDU session. In response to the PDU session modification request from the terminal device, the network-side device delivers a QoS parameter meeting the actual service requirement of the terminal device side, thereby ensuring the QoS of the actual service and improving user experience.

It can be understood that the process of performing, by the network-side device according to the third QoS parameter information, comparison and adjustment processing on a QoS parameter which is delivered in advance to determine fourth QoS parameter information is the same as that of S520 of determining second QoS parameter information according to the first QoS parameter information, so the details will not be repeated herein. The principle of performing, according to the third QoS parameter information, comparison and adjustment processing on a QoS parameter which is delivered in advance by the network-side device is also to meet the actual service requirement on the premise that the bandwidth threshold information and the delay threshold information specified by the operator are not exceeded.

An example is given below.

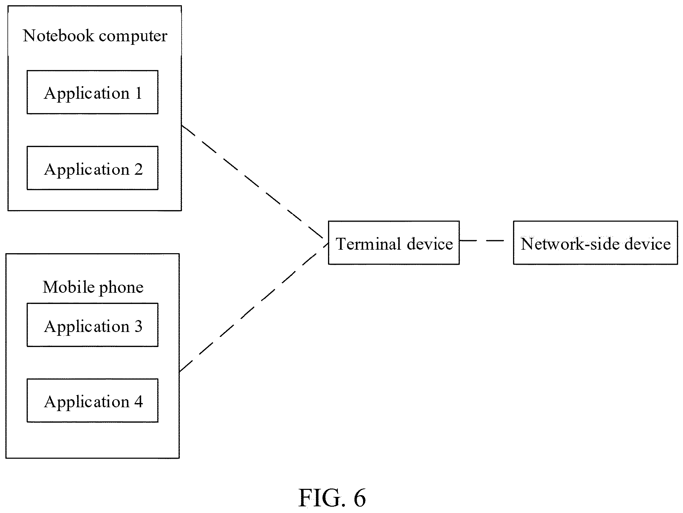

FIG. 6 is a schematic diagram of an application scenario of a session establishment method according to an embodiment of the present disclosure. In the example of FIG. 6, a terminal device, a mobile phone, a notebook computer, and a network-side device are involved. The terminal device can provide a network access function, the mobile phone and the notebook computer are connected to the terminal device through the network access function, and the terminal device is connected to the network-side device. An application 1 and an application 2 are running on the notebook computer, and an application 3 and an application 4 are running on the mobile phone.

The terminal device receives a service request reported by the mobile phone and a service request reported by the notebook computer. The terminal device obtains service requirements of the accessing UEs according to the service requests. The terminal device obtains information of a PDU session to be established based on a DNN parameter, and information of applications of the same type that need to use the PDU session in each of the UEs (e.g., the number of applications of the same type that are running simultaneously, or other necessary information). For example, the application 1, the application 2, the application 3, and the application 4 are services of the same time, e.g., are short video services. In this case, the mobile phone and the notebook computer respectively feed back, to the terminal device, a DNN parameter identifying the short video service and the number of short video services running thereon, which is 2. The terminal device side can obtain the total number of applications of the same type, which is 4.

The terminal device then attempts to initiate a PDU session establishment process. In the process of attempting to initiate PDU session establishment, the terminal device first detects whether a PDU session established based on the same DNN parameter has been established before. If there is no PDU session corresponding to the DNN parameter, the total number of applications of the same type is multiplied by bandwidth information required by a single application to obtain overall bandwidth requirement information required by all the applications, delay information of the application with a highest delay requirement among all the applications is determined as overall delay requirement information, and the overall bandwidth requirement information and the overall delay requirement information are determined as first QoS parameter indicators to request the network-side device.

For example, the terminal device detects that no PDU session has been established for the short video service before, and a bandwidth required by a single short video service is X Mbps, and a maximum delay required by a single short video service is Y ms. In addition, the terminal device already knows that there are two short video service applications on each of the notebook computer and the mobile phone, and all of the short video service applications are running at the same time. In this case, the terminal device can obtain through calculation that the overall bandwidth requirement information required by a PDU session for transmitting data related to the short video applications is X*(2 2)=4X Mbps and the overall delay requirement information required by the PDU session is Y ms, and determine first QoS parameter information to request the network-side device.

Then, after determining the first QoS parameter information, the terminal device initiates a PDU session establishment request to the network-side device. In addition to sending the DNN parameter to the network-side device, the terminal device may send the first QoS parameter information separately or together with the DNN parameter. The terminal device may also send other necessary information to the network-side device separately or together with the DNN parameter and the first QoS information at the time of the PDU session establishment request.

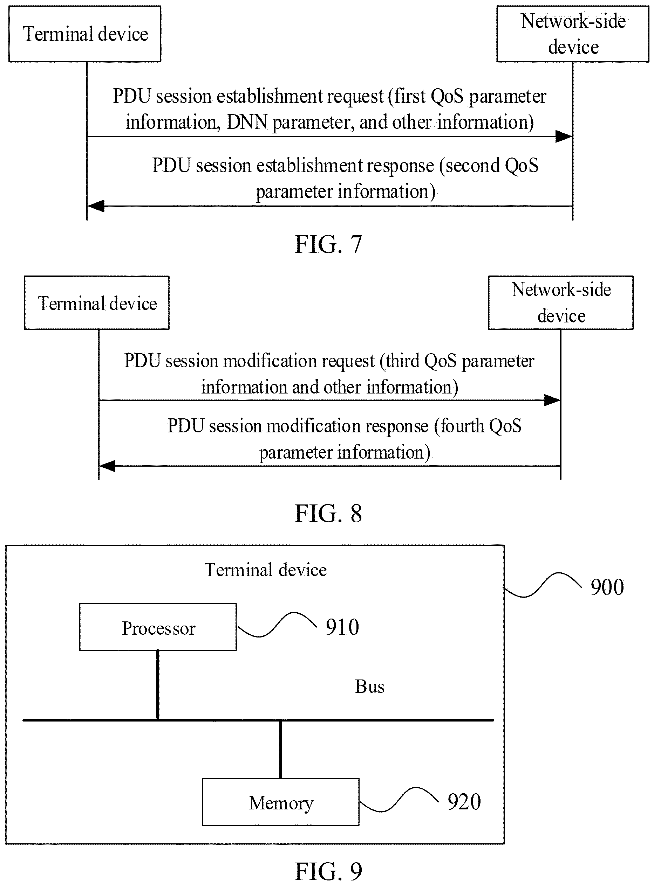

For example, PDU session establishment is performed with reference to FIG. 7, which is a schematic flowchart of PDU session establishment. To be specific, the terminal device initiates a PDU session establishment request carrying the first QoS parameter information, the DNN parameter, and other information to the network-side device, and the network-side device returns a PDU session establishment response, where the PDU session establishment response carries second QoS parameter information.

The PDU session establishment request message sent by the terminal device to the network-side device may carry DNN, QoS, and other information. The DNN may be a string agreed on with the operator to identify that the current service type is a short video service, e.g., IMS. The first QoS parameter information may include the required overall bandwidth requirement information of 4X Mbps and the required overall delay requirement information of Y ms, e.g., (4X Mbps, Y ms). The other information may include other necessary information, e.g., information indicating that the terminal type is a terminal device, information indicating that a total of four applications of the same type in the UE connected to the terminal device are using the PDU session at the same time, etc.

After receiving the DNN parameter and the first QoS parameter information reported by the terminal device, the network-side device determines, according to the DNN parameter, the fifth QoS parameter information to be delivered to the terminal, and compares the first QoS parameter information reported by the terminal device with the fifth QoS parameter information to be delivered. If determining that the fifth QoS parameter information to be delivered can meet the first QoS parameter information reported by the terminal, the network-side device determines the fifth QoS parameter information as the second QoS parameter information and directly delivers the fifth QoS parameter information as the second QoS parameter information. If determining that the fifth QoS parameter information to be delivered cannot meet the first QoS parameter information reported by the terminal, the network-side device adjusts the fifth QoS parameter information to be delivered to second QoS parameter information that can meet the first QoS parameter information reported by the terminal, and then delivers the second QoS parameter information.

The network-side device may acquire subscribed package information of the user by authenticating the mobile phone and the notebook computer, to determine network resource permission granted to the user, including maximum bandwidth information that the user is allowed to use, minimum delay information that the user can require, and other information. According to the DNN parameter reported by the terminal being IMS, the network side can learn that the PDU session is to be used for transmitting data related to the short video service, and can also learn that the bandwidth required by the short video service is X Mbps and the delay required by the short video service is Y ms. According to the first QoS parameter information reported by the terminal, the network side can learn that the overall bandwidth requirement information actually required by the terminal device is 4X Mbps, and the overall delay requirement information actually required by the terminal device is Y ms. According to the other information provided by the terminal device, the network-side device can learn that the terminal type is a wireless terminal device, and a total of four short video applications of the same type are running simultaneously and are connected to the terminal device for data transmission. The network-side device first sets the fifth QoS parameter information to be delivered to (X Mbps, Y ms). When determining through comparison that the overall bandwidth requirement information of 4X Mbps requested by the terminal is greater than the bandwidth X Mbps required by the short video service and does not exceed the maximum bandwidth information agreed in the package information of the user, the network-side device changes the fifth QoS parameter information to be delivered to (4X Mbps, Y ms), thus obtaining the second QoS parameter information. When determining through comparison that the delay of Y ms requested by the terminal is the same as the delay level required by the short video service and is not lower than the minimum delay information agreed in the package information of the user, the network-side device determines that the delay parameter in the fifth QoS parameter information to be delivered does not need to be changed. Then, the network-side device determines QoS parameters of the PDU session to be (4X Mbps, Y ms), and sends the QoS parameters to the terminal device through signaling to establish the PDU session.

If the terminal device detects that a PDU session corresponding to the DNN parameter has been established before, the terminal device adds a bandwidth in a QoS parameter of the PDU session established before to the overall bandwidth requirement information during calculation of the overall bandwidth requirement information. In addition, a PDU session modification process shown in FIG. 8 should be initiated. In the example of FIG. 8, the terminal device initiates a PDU session modification request to the network-side device, and the network-side device returns a PDU session modification response to the terminal device to realize the modification of the PDU session.

For example, the notebook product implementing network access through the terminal device has informed the terminal device that short video service data of the application 1 and the application 2 needs to be transmitted, and the terminal device has initiated a PDU session establishment process, and has successfully established a PDU session with QoS parameters (2X Mbps, Y ms). Then, the mobile phone product connects to the terminal device, and informs the terminal device that short video service data of the application 3 and the application 4 needs to be transmitted. In this case, the terminal device determines according to the information reported by the mobile phone that the required bandwidth is 2X Mbps and the required delay is Y ms. The terminal device also detects that it has acquired the QoS parameters (2X Mbps, Y ms) of the previously established PDU session for transmitting service data of the same type. Therefore, the terminal device can obtain through calculation that the required overall bandwidth is a sum of the new bandwidth requirement and the existing bandwidth, i.e., 2X+2X=4X Mbps, and the required overall delay is the one with a higher requirement among the new delay requirement Y ms and the existing delay requirement Y ms, i.e., Y ms. Therefore, it can be obtained that the new QoS requirement is (4X Mbps, Y ms). The QoS parameters of the PDU session also need to be changed through the PDU session modification process.

In addition, if detecting that a resource actually allocated by the network-side device cannot reach a level of previously configured QoS parameter information, the terminal device may attempt to initiate a PDU session modification process to reconfigure the QoS parameter information of the PDU session. In the application scenario shown in FIG. 6, the terminal device has established a PDU session with the network-side device, and the QoS parameter information delivered by the network is (4X Mbps, Y ms). However, in the process of service transmission, if the terminal device finds that the actual downlink bandwidth obtained is far less than the bandwidth in the QoS indicators for a long time, or some data packets are not responded for a long time and the response delay exceeds a guaranteed delay in the QoS parameter information, the terminal device may determine that there is an abnormality in the guarantee of the QoS parameter information of the current network transmission. A cause of the abnormality may be that the wireless environment is affected by other interference and deteriorates, resulting in the network side being unable to provide services according to the QoS parameter information, or may be an abnormality on the network side, resulting in the previous QoS parameter information not being stored normally. Regardless of the cause of the abnormality, the terminal device may initiate a PDU session modification process, and send previously obtained QoS parameter information of the PDU session as a request parameter to the network-side device again, to request the network side to provide service guarantee based on the QoS parameter information.

When the terminal device is a mobile phone product, the mobile phone product only needs to calculate bandwidth requirements of the applications running thereon, and does not need to calculate bandwidth requirements of applications on other terminals connected to the terminal device. A method executed by the network-side device in this case is the same as that described above, so the details will not be repeated herein.

FIG. 9 is a schematic structural diagram of a terminal device according to an embodiment of the present disclosure. The terminal device 900 according to the embodiment of the present disclosure includes one or more processors 910 and one or more memories 920. FIG. 9 uses one processor 910 and one memory 920 as an example. The processor 910 and the memory 920 may be connected by a bus or in other ways. Connection by a bus is used as an example in FIG. 9.

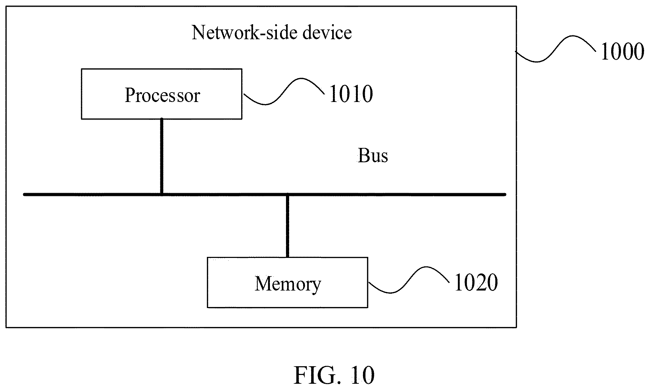

FIG. 10 is a schematic structural diagram of a network-side device according to an embodiment of the present disclosure. The network-side device 1000 according to the embodiment of the present disclosure includes one or more processors 1010 and one or more memories 1020. FIG. 10 uses one processor 1010 and one memory 1020 as an example. The processor 1010 and the memory 1020 may be connected by a bus or in other ways. Connection by a bus is used as an example in FIG. 10.

Each of the memory 920 and the memory 1020, as a non-transitory computer-readable storage medium, may be configured for storing a non-transitory software program and a non-transitory computer-executable program. In addition, each of the memory 920 and the memory 1020 may include a high-speed random access memory, and may also include a non-transitory memory, e.g., at least one magnetic disk storage device, flash memory device, or other non-transitory solid-state storage device. In some implementations, the memory 920 and the memory 1020 respectively includes memories 920 located remotely from the processor 910 and memories 1020 located remotely from the processor 1010, and the remote memories 920 and the remote memories 1020 may be respectively connected to the terminal device 900 and the network-side device 1000 via a network. Examples of the network include, but not limited to, the Internet, an intranet, a local area network, a mobile communication network, and combinations thereof.

Those having ordinary skills in the art may understand that the apparatus structure shown in FIG. 9 does not constitute a limitation to the terminal device 900, the apparatus structure shown in FIG. 10 does not constitute a limitation to the network-side device 1000, and the terminal device 900 and the network-side device 1000 may include more or fewer components than those shown in the figures, or some components may be combined, or a different component arrangement may be used.

The non-transitory software program and instructions required to implement the session establishment method applied to the terminal device 900 of the foregoing embodiments are stored in the memory 920 which, when executed by the processor 910, cause the processor 910 to implement the session establishment method applied to the terminal device 900 of the foregoing embodiments, for example, implement the method steps S210 to S230 in FIG. 2, the method steps S310 to S330 in FIG. 3, and the method steps S410 to S450 in FIG. 4.

The non-transitory software program and instructions required to implement the session establishment method applied to the network-side device 1000 of the foregoing embodiments are stored in the memory 1020 which, when executed by the processor 1010, cause the processor 1010 to implement the session establishment method applied to the network-side device 1000 of the foregoing embodiments, for example, implement the method steps S510 to S540 in FIG. 5.

The apparatus embodiments described above are merely examples. The units described as separate components may or may not be physically separated, i.e., they may be located in one place or may be distributed over a plurality of network units. Some or all of the modules may be selected according to actual needs to achieve the objects of the scheme of this embodiment.

In addition, an embodiment of the present disclosure further provides a computer-readable storage medium, storing computer-executable instructions which, when executed by one or more processors, for example, by one or more processors 910 in FIG. 9, may cause the one or more processors 910 to implement the method in the above method embodiments, for example, implement the method steps S210 to S230 in FIG. 2, the method steps S310 to S330 in FIG. 3, and the method steps S410 to S450 in FIG. 4. For another example, the computer-executable instructions, when executed by one or more processors 1010 in FIG. 10, may cause the one or more processors 1010 to implement the method in the above method embodiments, for example, implement the method steps S510 to S540 of the method in FIG. 5.

An embodiment of the present disclosure includes: determining, by a terminal device, first QoS parameter information according to a service requirement; sending, to a network-side device, a PDU session establishment request carrying the first QoS parameter information, such that the network-side device determines second QoS parameter information according to the first QoS parameter information, and generates a PDU session establishment response according to the second QoS parameter information; and receiving the PDU session establishment response returned by the network-side device, and establishing a PDU session. According to the scheme of the embodiment of the present disclosure, the terminal device determines first QoS parameter information according to a service requirement; then sends, to a network-side device, a PDU session establishment request carrying the first QoS parameter information, such that the network-side device determines second QoS parameter information according to the first QoS parameter information, and generates a PDU session establishment response according to the second QoS parameter information; and then receives the PDU session establishment response returned by the network-side device, and establishing a PDU session. In other words, by the scheme according to the embodiment of the present disclosure, the terminal device reports a QoS parameter reflecting an actual service requirement to the network-side device, such that the network-side device delivers a QoS parameter meeting the actual service requirement of the terminal device side, thereby ensuring the QoS of the actual service and improving user experience.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a Random Access Memory (RAM), a Read-Only Memory (ROM), an Electrically Erasable Programmable Read-Only Memory (EEPROM), a flash memory or other memory technology, a compact disc Read-Only Memory (CD-ROM), a Digital Versatile Disc (DVD) or other optical storage, a cassette, a magnetic tape, a magnetic disk storage or other magnetic storage device, or any other medium which can be used to store the desired information and which can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium.

## Claims

1. A session establishment method, applied to a terminal device, the method comprising:
determining first Quality of Service (QoS) parameter information according to a service requirement;
sending, to a network-side device, a Protocol Data Unit (PDU) session establishment request carrying the first QoS parameter information, such that the network-side device determines second QoS parameter information according to the first QoS parameter information, and generates a PDU session establishment response according to the second QoS parameter information; and
receiving the PDU session establishment response returned by the network-side device, and establishing a PDU session.

2. The session establishment method of claim 1, wherein determining first QoS parameter information according to a service requirement comprises:
acquiring the service requirement;
performing statistical processing on the service requirement to obtain overall bandwidth requirement information and overall delay requirement information; and
determining the first QoS parameter information according to the overall bandwidth requirement information and the overall delay requirement information.

3. The session establishment method of claim 2, wherein performing statistical processing on the service requirement to obtain overall bandwidth requirement information and overall delay requirement information comprises:
acquiring a quantity of services and bandwidth information and delay information of each of the services according to the service requirement; and
obtaining the overall bandwidth requirement information and the overall delay requirement information according to the quantity of services and the bandwidth information and the delay information of each of the services.

4. A session establishment method, applied to a terminal device, the method comprising:
acquiring a service requirement;
acquiring a Data Network Name (DNN) parameter of a service according to the service requirement;
in response to detecting existence of a Protocol Data Unit (PDU) session established based on the DNN parameter, determining third Quality of Service (QoS) parameter information according to the established PDU session and the service requirement;
sending a PDU session modification request carrying the third QoS parameter information to a network-side device, such that the network-side device determines fourth QoS parameter information according to the third QoS parameter information, and generates a PDU session modification response according to the fourth QoS parameter information; and
receiving the PDU session modification response returned by the network-side device, and modifying the PDU session.

5. The session establishment method of claim 4, wherein determining third QoS parameter information according to the established PDU session and the service requirement comprises:
obtaining sixth QoS parameter information according to the established PDU session;
performing statistical processing according to the sixth QoS parameter information and the service requirement to obtain overall bandwidth requirement update information and overall delay requirement update information; and
determining the third QoS parameter information according to the overall bandwidth requirement update information and the overall delay requirement update information.

6. A session establishment method, applied to a network-side device, the method comprising:
receiving, from a terminal device, a Protocol Data Unit (PDU) session establishment request carrying first Quality of Service (QoS) parameter information, wherein the first QoS parameter information is determined by the terminal device according to a service requirement;
determining second QoS parameter information according to the first QoS parameter information;
generating a PDU session establishment response according to the second QoS parameter information; and
sending the PDU session establishment response to the terminal device to establish a PDU session.

7. The session establishment method of claim 6, wherein determining second QoS parameter information according to the first QoS parameter information comprises:
acquiring fifth QoS parameter information which is delivered in advance and bandwidth threshold information and time delay threshold information specified by an operator, and
performing comparison and adjustment processing on the fifth QoS parameter information according to the first QoS parameter information, the bandwidth threshold information, and the delay threshold information to determine the second QoS parameter information.

8. The session establishment method of claim 7, wherein performing comparison and adjustment processing on the fifth QoS parameter information according to the first QoS parameter information, the bandwidth threshold information, and the delay threshold information to determine the second QoS parameter information comprises:
determining the fifth QoS parameter information as the second QoS parameter information, in response to the fifth QoS parameter information satisfying the first QoS parameter information, the bandwidth threshold information, and the delay threshold information; or
adjusting the fifth QoS parameter information according to the first QoS parameter information, the bandwidth threshold information, and the delay threshold information to obtain the second QoS parameter information, in response to the fifth QoS parameter information not satisfying the first QoS parameter information.

9. A session establishment method, applied to a network-side device, the method comprising:
receiving, from a terminal device, a Protocol Data Unit (PDU) session modification request carrying third Quality of Service (QoS) parameter information, wherein the third QoS parameter information is determined by the terminal device according to a PDU session which has been established and a service requirement;
performing, according to the third QoS parameter information, comparison and adjustment processing on a QoS parameter which is delivered in advance to determine fourth QoS parameter information;
generating a PDU session modification response according to the fourth QoS parameter information; and
sending the PDU session modification response to the terminal device to modify the PDU session.

10. A terminal device, comprising: a memory, a processor, and a computer program stored in the memory and executable by the processor, wherein the computer program, when executed by the processor, causes the processor to perform the session establishment method of any of claims 1 to 3 or the session establishment method of any of claims 4 to 5.

11. A network-side device, comprising: a memory, a processor, and a computer program stored in the memory and executable by the processor, wherein the computer program, when executed by the processor, causes the processor to perform the session establishment method of any of claims 6 to 8 or the session establishment method of claim 9.

12. A computer-readable storage medium, storing computer-executable instructions which, when executed by a processor, cause the processor to perform the session establishment method of any of claims 1 to 3, the session establishment method of any of claims 4 to 5, the session establishment method of any of claims 6 to 8, or the session establishment method of claim 9.
